Europäisches Patentamt

(19) European Patent Office

Office européen des brevets

(11) Numéro de publication: **0 006 803**
**A2**

# (12) DEMANDE DE BREVET EUROPEEN

(21) Numéro de dépôt: 79400403.6

(22) Date de dépôt: 19.06.79

(51) Int. Cl.³: **A 23 N 17/02,** B 30 B 9/12,
B 30 B 9/18

(30) Priorité: 28.06.78 YU 1529/78
28.06.78 YU 1530/78
08.05.79 FR 7912254

(43) Date de publication de la demande: **09.01.80**
**Bulletin 80/1**

(84) Etats contractants désignés: **BE CH DE GB IT LU NL SE**

(71) Demandeur: **LOHR S.A., 14, rue du 14 Juillet, F-67 980
Hangenbieten (FR)**

(72) Inventeur: **Poznanovic, Milenko, Suboticka Br. 2, 21000
Novi Sad (YU)**

(74) Mandataire: **Poupon, Michel, Cabinet Arbousse
Bastide 20, rue de Copenhague, F-67000
Strasbourg (FR)**

(54) **Procédé pour le fractionnement et le conditionnement de plantes vertes et dispositif pour sa mise en oeuvre.**

(57) Procédé pour le fractionnement des plantes vertes,
telles que la luzerne, et la conservation des pulpes permettant:
— de recueillir séparément le jus de la pulpe à des
pourcentages variés et au taux désiré pour une utilisation
plus judicieuse des composants et, en particulier, une meilleure valorisation des protéines;
— de conserver les pulpes en fractions commerciales
par un procédé de dosage-pressage et de conservation
anaérobie, éliminant toute deshydratation, d'où économie
appréciable d'énergie.
Procédé caractérisé en ce qu'il comporte une phase
primaire de broyage et d'éclatement des tiges sans malaxage de la cellulose et une phase secondaire dans laquelle
on réalise un fractionnement définitif au degré désiré. Dispositif pour la mise en oeuvre du procédé.
Application: industries agro-alimentaires.

EP 0 006 803 A2

ACTORUM AG

0006803

La présente invention a pour objet un procédé pour le fractionnement à des taux élevés et au taux désiré des plantes vertes pour l'alimentation et un dispositif pour la mise en oeuvre dudit procédé.

Les coûts croissants de la main d'oeuvre et des transports ont fait progressivement régresser les techniques traditionnelles d'ensilage et de séchage naturel au profit de la déshydratation et de la granulation.

Toutefois, ces techniques de déshydratation et de granulation présentent encore des inconvénients non négligeables. Ainsi par exemple, malgré une décroissance très forte des consommations spécifiques d'énergie au cours des dernières années pour la mise en oeuvre de ces techniques, la part de la seule énergie dans le prix des produits déshydratés, en particulier pour l'alimentation animale, reste de l'ordre de 30 % du prix de revient du produit commercialisé, et tend bien entendu à s'accroître avec les évolutions du prix du pétrole.

Par ailleurs, il est connu que les ruminants n'utilisent en fait qu'une partie des protéines contenues dans le fourrage ainsi traité et conditionné. Il s'ensuit un gâchis considérable pour un composant qui fait défaut, par ailleurs, dans la nourriture des monogastriques, et qui déséquilibre la balance commerciale de nombreux pays par l'importation rendue nécessaire de tourteaux de soja ou de farine de poisson par exemple.

Enfin, dans les procédés de fractionnement connus, on parvient à extraire au maximum de l'ordre de 28 % du jus contenu dans la masse alimentée.

La présente invention a pour objet de proposer un procédé pour réaliser le fractionnement des plantes vertes utilisées dans l'alimentation et le conditionnement éventuel des pulpes répondant aux préoccupations suivantes :

- économie de l'énergie de déshydratation ;

- obtention d'un fractionnement à des taux élevés, atteignant 50 %, pouvant être modulés en fonction du résultat recherché (par exemple chez les bovidés : production laitière ou production carnée), d'où un gain considérable en protéines ;

- possibilité de conservation des pulpes obtenues par le fractionnement.

Selon l'invention, ces résultats sont obtenus en proposant un procédé pour le fractionnement des plantes vertes pour l'alimentation, caractérisé en ce qu'il comporte une phase primaire de broyage et d'éclatement des tiges sans malaxage de la cellulose et une phase secondaire dans laquelle on réalise le fractionnement définitif de la masse.

Cette conception présente l'avantage par rapport aux procédés de l'art antérieur de permettre de conduire chacune des phases selon le résultat final désiré, c'est-à-dire selon le taux de fractionnement désiré.

Le taux de fractionnement final est variable et adaptable selon la nature des plantes ainsi traitées et le résultat recherché. A titre d'exemple, pour la luzerne, qui est riche en protéines, il semble que le taux de fractionnement de 50/50 puisse être retenu comme étant le plus avantageux. En cet état en effet, la pulpe non seulement conserve le même pouvoir nutritif pour les ruminants que la luzerne fraîche ou déshydratée, mais accroît le rendement de croissance animale par suite d'une meilleure digestion des graisses brutes et de la cellulose.

Selon un mode préféré de mise en oeuvre du procédé, il comportera en fin de la phase secondaire une prémastication de la pulpe. Cette prémastication représente pour l'animal une dépense d'énergie plus faible pour la rumination et l'assimilation des aliments, d'où une amélioration notable de l'accroissement moyen quotidien.

Selon une autre caractéristique essentielle, on prévoiera que le jus extrait au cours des phases primaire et secondaire subisse une autofiltration au travers de la masse traitée dans chacune desdites phases respectivement, cette autofiltration résultant à chaque fois de l'établissement d'un gradient de pression.

Préférentiellement, lorsqu'il sera recherché, ce qui est généralement le cas, une possibilité de conservation et de transport des pulpes, le procédé selon l'invention sera complété par une phase de dosage-pressage et d'ensachage, permettant de réaliser d'une part une réduction de volume de la pulpe et d'autre part une conservation anaérobie, évitant donc toute dégradation du produit.

En ce qui concerne le jus recueilli en excédent et comme sous-produit dans l'utilisation envisagée, il possède une forte teneur en protéines brutes, à savoir 25 à 50 % du poids sec, c'est-à-dire 2 à 3,5 % du poids liquide et renferme en outre des composés hydrocarbonés, des matières minérales et des vitamines. Il se révèle être par exemple un substitut avantageux des farines de poisson et des graines de soja dans l'alimentation animale. Il peut subir divers traitements ultérieurs connus en eux-mêmes, comme par exemple la dessication, totale ou partielle.

Pour la mise en oeuvre du procédé selon l'invention, on propose également un dispositif consistant en une unité de pressage comportant d'une part une presse primaire servant à broyer et éclater les tiges comportant un rotor constitué par une vis conique à pas et profil variables et un second rotor animé d'un mouvement combiné de rotation et de translation, par rapport au premier rotor, les deux dits rotors tournant préférentiellement de manière asynchrone, et d'autre part une presse secondaire du même type que la presse primaire mais dans laquelle les rotors tournent préférentiellement de manière synchrone, le premier rotor de la presse secondaire effectuant le fractionnement définitif de la masse et la séparation entre la pulpe et le jus, le second rotor de ladite presse secondaire opérant la prémastication de la pulpe.

Selon un mode de réalisation préféré, on prévoiera également en aval, une unité de conditionnement spécifique de la pulpe comportant essentiellement une presse constituée par un cylindre rotatif à deux ou plusieurs compartiments associés à des moyens de remplissage des compartiments avec la pulpe et des moyens de pressage de la pulpe dans lesdits compartiments.

Dans le dispositif proposé, on pourra prévoir éventuellement que chacune des presses primaire et secondaire fonctionne avec une alimentation forcée. La justification des deux presses successives est essentiellement que la présence de la première presse améliore nettement le taux de fractionnement pouvant être atteint par la seconde. Ainsi on ne sortirait pas du cadre de l'invention en ne prévoyant qu'une seule presse par exemple du type de la presse secondaire, dans laquelle les deux phases du procédé seraient réalisées simultanément.

Dans les presses primaire et secondaire, la masse alimentée est poussée par les vis coniques vers leur extrémité la plus étroite en direction des rotors animés d'un mouvement de translation. Ce faisant, on crée dans la masse un gradient de pression qui a en outre pour conséquence que le jus extrait s'écoule dans le sens inverse de l'augmentation de la pression, c'est-à-dire en pratique en s'autofiltrant à travers la masse.

Pour parvenir à ce résultat, une caractéristique essentielle de l'invention consistera à prévoir sur les parois internes des carters dans lesquels sont disposés les rotors des presses primaire et secondaire des barrettes longitudinales. Ces barrettes ont essentiellement pour fonction de :

- permettre un écoulement privilégié du jus extrait ;

- favoriser le malaxage de la masse ;

- permettre l'autofiltration du jus au travers de la masse.

On comprendra mieux l'invention à l'aide de la description ci-après d'un mode de réalisation préféré des moyens de mise en oeuvre du procédé objet de l'invention et des dessins annexés dans lesquels :

- la figure 1 représente une coupe longitudinale de la presse primaire ;

- la figure 2 représente une coupe longitudinale de la presse secondaire ;

- la figure 3 représente une coupe longitudinale de la presse de conditionnement de la pulpe ;

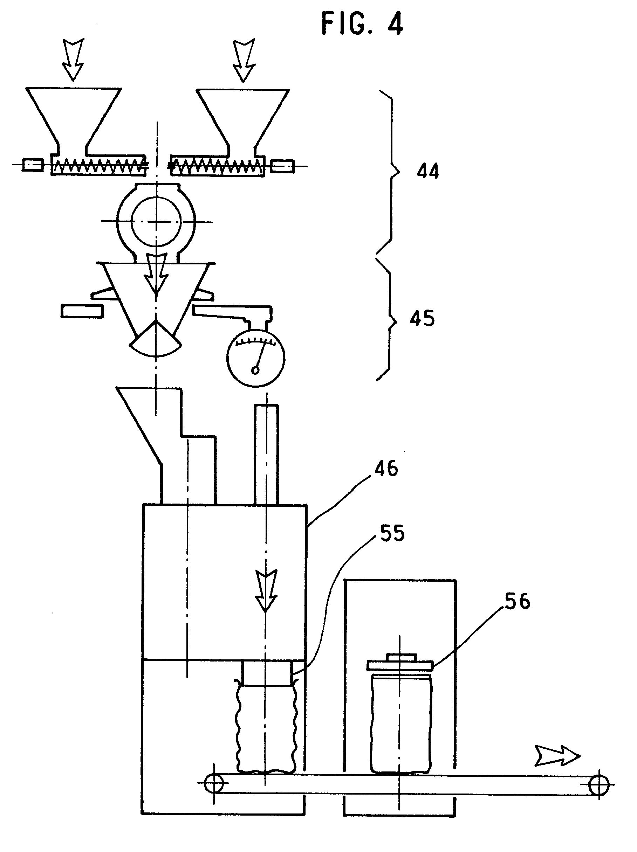

- la figure 4 est une schématisation d'une unité de conditionnement industrielle.

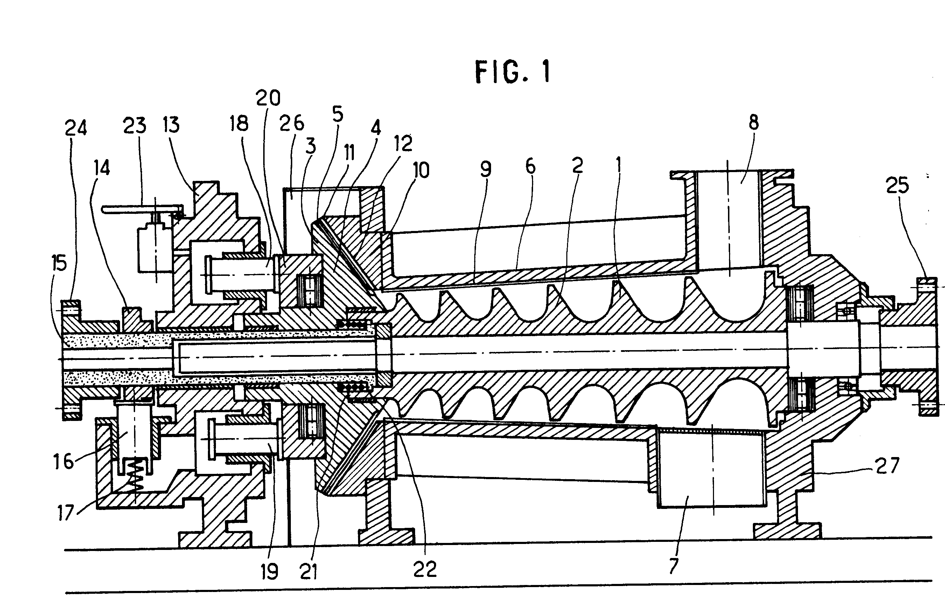

La presse primaire représentée en figure 1 est constituée d'un premier rotor constitué par une vis conique 2 à pas et à profil variables et d'un second rotor 3 constitué par un plateau tronconique 4 sur la surface active duquel sont ménagées des fraisures radiales 5 à sections dégressives. Les deux rotors sont animés de mouvements de rotation asynchrones, en fonction du produit à traiter. De plus, le rotor 3 est animé d'un mouvement de translation axiale dont l'amplitude est réglable en fonction du produit à traiter.

Le rotor 1 est logé dans un carter 6 de conception particulière. En effet, alors que dans une presse à vis du type de celles déjà connues, le jus s'écoule tout le long d'un secteur d'une génératrice, dans le présent carter la conformation est telle que le jus ne s'écoule qu'à son extrémité amont 7 située au même niveau que l'alimentation 8 en produit à traiter.

On prévoit à cet effet des barrettes longitudinales 9 disposées sur la paroi interne du carter 6 qui, tout en facilitant l'écoulement privilégié du jus, empêchent la rotation à la fois de la masse et du jus avec la vis 2.

De cette manière, le jus extrait se filtre au travers de la masse et on recueille en 7 un jus, pratiquement exempt de cellulose.

Le rotor 3 qui est animé d'un mouvement combiné de rotation axiale et de translation le long de ce même axe coopère avec un anneau statique 10 de forme tronconique correspondante, dont la face interne 11 en regard du rotor 3 est munie de rainures radiales 12 à sections dégressives correspondant aux fraisures 5 du rotor 3.

On peut concevoir de faire varier les formes respectives des fraisures 5 et des rainures 12 en fonction de l'application recherchée. Ainsi elles pourront être spirales, excentriques, composites etc...

Sur la face arrière du rotor 3 est ménagé un compartiment 13 d'oscillation de translation axiale dudit rotor. Il comporte par exemple une commande à came 14 disposée sur l'axe 15 du rotor 3 et entraînée en rotation avec celui-ci, came qui par l'intermédiaire d'un piston plongeur 16 rappelé par un ressort 17, transmet hydrauliquement les impulsions à chaque passage de la came 14 (il peut d'ailleurs y avoir plusieurs cames de ce type), à une série de pistons 18, 19 disposées annulairement autour et contre la butée d'appui 20 de rotor 3. Un ressort de compensation 21 disposé sur l'axe du rotor 3 et prenant appui sur une butée 22 permet d'entretenir le mouvement en repoussant le rotor vers l'arrière lorsque la came 14 n'agit plus sur le piston plongeur 16. On prévoit également un dispositif 23 qui permet de faire varier le jeu possible entre le rotor 3 et l'anneau statique 10 par injection ou soutirage d'huile dans le compartiment 13.

Les rotors 1 et 3 sont munis de manière connue en elle-même d'accouplements d'entraînement 24, 25 à vitesses fixes ou variables.

Dans cette presse primaire, la masse alimentée en 8 ressort sous forme de jus en 7 et sous forme de pulpe dont la structure des fibres est cassée sans malaxage de la cellulose, cette masse solide sortant par le compartiment 26 après forçage entre le rotor 3 et l'anneau statique 10 sous l'action de la vis 2.

L'ensemble de presse est disposé sur un bâti 27.

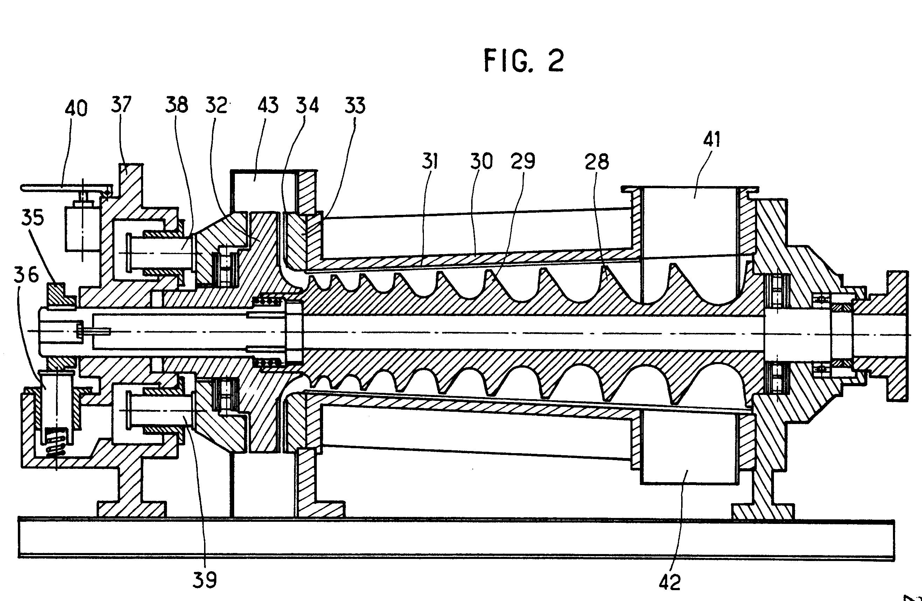

La presse secondaire telle que représentée figure 2 est du même type que la presse primaire, avec cependant quelques adaptations. En particulier, le rotor 28 de la presse secondaire doit permettre d'atteindre des taux de compression notablement plus élevés. Ceci est réalisé par la forme de la vis elle-même et par la forme du rotor arrière 32 dont la face plane permet entre autres de réguler le taux de compression.

Elle se compose d'un rotor 28 constitué par une vis conique 29 à pas et profil variables, disposée dans un carter 30 muni de barrettes longitudinales 31 et d'un second rotor partiellement tronconique 32 coaxial avec le premier rotor 28 et lui faisant face, ledit rotor étant animé d'un mouvement combiné de rotation autour de son axe et de translation axiale alternée vers un anneau statique 33 de type voisin de celui de la presse primaire, et comportant donc également des rainures radiales 34. Cet anneau statique 33 présente toutefois la particularité qu'il est plan et non plus tronconique, c'est-à-dire qu'il comporte une partie perpendiculaire à l'axe des rotors, et il coopère avec une face plane correspondante du rotor 32. On assure par cette configuration une prémastication de la pulpe, et la régulation du taux de compression.

Par rapport au mouvement de translation du rotor de la presse primaire, celui du rotor 32 est d'amplitude plus réduite et de fréquence plus élevée. Ce mouvement est entretenu par un dispositif comportant une came 35, un piston plongeur 36, un compartiment 37 et des pistons 38, 39 de la même manière que pour la presse primaire. De même, le compartiment 37 est muni d'un dispositif 40 d'injection ou de soutirage

- 7 -

0006803

d'huile qui permet de faire varier, en cours de fonctionnement, la section de sortie de la pulpe entre le rotor 32 et l'anneau statique 33. On peut ainsi atteindre le taux de fractionnement optimal souhaité en fonction du produit traité.

Le produit à traiter issu de la presse primaire est alimenté en 41, le jus sortant en 42, et la pulpe définitivement fractionnée et pré-mastiquée sortant par le compartiment 43.

La pulpe ainsi obtenue est conditionnée de manière à permettre une conservation suffisante de la pulpe fraîche pour une longue période d'utilisation. Le conditionnement doit également permettre de faciliter le transport et le stockage sur de longues périodes.

Pour ce faire, on prévoit une unité de conditionnement spécifique en aval de la presse secondaire, ladite unité comportant successivement :

- un ensemble de dosage et de mélange 44 avec des compléments alimentaires, selon le besoin ;

- un système de pesée 45 ;

- un dispositif de conditionnement par presse 46, et d'ensachage 55 ;

- un dispositif de fermeture hermétique 56, éventuellement sous vide, des sacs ;

- un ensemble d'automatisation des différentes opérations.

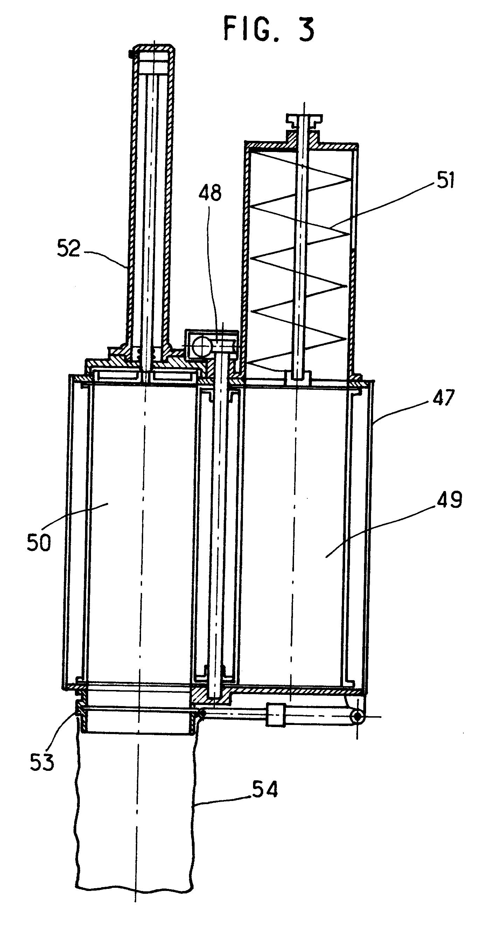

Les divers dispositifs décrits ci-dessus sont de type classique et bien connus en eux-mêmes, à l'exception du dispositif de conditionnement par presse 46 représenté figure 3.

Ce dispositif se compose d'un cylindre rotatif 47 entraîné en rotation de manière connue en elle-même par un vérin rotatif 48. Ce cylindre comporte deux ou plusieurs compartiments 49, 50 le traversant de part en part. La pulpe est alimentée par une vis de bourrage 51 dans l'un des compartiments. Le remplissage effectué, le cylindre effectue une rotation indexée, par exemple de 180° pour deux compartiments, et présente le compartiment rempli sous un vérin de compression 52. Le pressage est alors effectué au degré désiré et le vérin pousse la pulpe pressée à travers un obturateur 53 dans un sac en matière plastique 54 accroché de manière en elle-même connue sous l'obturateur 53.

Tous les mouvements sont opérés automatiquement,

0006803

le remplissage d'un compartiment s'effectuant en même temps que l'opération de pressage et d'évacuation de l'autre compartiment.

0006803

Revendications

1.  Procédé pour le fractionnement des plantes vertes permettant de recueillir séparément le jus et la pulpe à des pourcentages variés et au taux désiré pour une utilisation plus judicieuse des composants et, en particulier, une meilleure valorisation des protéines caractérisé en ce qu'il comporte une phase primaire de broyage et d'éclatement des tiges sans malaxage de la cellulose et une phase secondaire dans laquelle on réalise un fractionnement définitif au degré désiré.

2.  Procédé selon la revendication 1, caractérisé en ce que la pulpe est soumise en fin de phase secondaire à une prémastication.

3.  Procédé selon l'une quelconque des revendications 1 et 2, caractérisé en ce que le jus extrait au cours des phases primaire et secondaire subit une autofiltration éliminant la cellulose à travers les masses solides.

4.  Procédé selon l'une quelconque des revendications de 1 à 3, caractérisé en ce que la pulpe obtenue en fin de phase secondaire est soumise à un conditionnement par pressage permettant sa présentation sous un volume plus faible et une conservation anaérobie.

5.  Dispositif pour la mise en oeuvre du procédé selon l'une quelconque des revendications de 1 à 4, caractérisé en ce qu'il consiste en une unité de pressage comportant d'une part une presse primaire servant à broyer et éclater les tiges comportant un rotor (1) constitué par une vis conique (2) à pas et profil variables et un second rotor (3) animé d'un mouvement combiné de rotation et de translation par rapport au premier rotor, et d'autre part une presse secondaire comportant également un rotor (28) constitué par une vis conique (29) à pas et profil variables permettant d'obtenir un taux de compression supérieur à celui de la première presse et un second rotor (32) animé d'un mouvement combiné de rotation et de translation par rapport au premier rotor (28).

6.  Dispositif selon la revendication 5, caractérisé en ce que les deux rotors de la presse primaire tournent de manière asynchrone.

7.  Dispositif selon l'une quelconque des revendications 5 et 6, caractérisé en ce que les deux rotors de la presse secondaire tournent de manière asynchrone.

8.  Dispositif selon l'une quelconque des revendications de 5 à 7, caractérisé en ce que l'alimentation des presses est forcée.

9.          Dispositif selon l'une quelconque des revendications de 5 à 8, caractérisé en ce que le second rotor (3) de la presse primaire est de forme tronconique et est animé d'un mouvement combiné de rotation et de translation contre un anneau statique (10) tronconique.

10.          Dispositif selon la revendication 9, caractérisé en ce que la face interne (11) de l'anneau statique tronconique faisant face au rotor tronconique est munie de rainures radiales (12) à sections dégressives, et que la face externe correspondante du rotor tronconique est munie de fraisures radiales (5) à sections dégressives.

11.          Dispositif selon l'une quelconque des revendications de 5 à 10, caractérisé en ce que le premier rotor de la presse primaire et le premier rotor de la presse secondaire sont logés chacun dans un carter (6), respectivement (30) muni intérieurement de barrettes longitudinales (31).

12.          Dispositif selon l'une quelconque des revendications de 5 à 11, caractérisé en ce que le second rotor de la presse secondaire comporte une partie annulaire plane coopérant avec un anneau statique (33) comportant une face plane perpendiculaire à l'axe des rotors.

13.          Dispositif selon la revendication 12, caractérisé en ce que la partie annulaire plane du second rotor comporte des rainures radiales et que la partie plane de l'anneau statique comporte des fraisures radiales.

14.          Dispositif selon l'une quelconque des revendications de 5 à 13, caractérisé en ce qu'il est complété en aval par une unité de conditionnement consistant en un cylindre rotatif (47) à deux ou plusieurs compartiments (49, 50) associés à des moyens de remplissage (51) des compartiments avec la pulpe et des moyens de pressage (52) de la pulpe dans lesdits compartiments.

## FIG. 1

0006803

FIG. 2

0006803

FIG. 3

0006803

3/4

FIG. 4

44

45

46

55

56